(19) Europäisches Patentamt
European Patent Office
Office européen des brevets

(11) **EP 3 919 692 B1**

(12) **EUROPEAN PATENT SPECIFICATION**

(45) Date of publication and mention
of the grant of the patent:
**06.12.2023 Bulletin 2023/49**

(21) Application number: **20869986.8**

(22) Date of filing: **18.09.2020**

(51) International Patent Classification (IPC):
***E02F 9/26*** (2006.01)

(52) Cooperative Patent Classification (CPC):
**E02F 9/2228; E02F 9/2235; E02F 9/261**

(86) International application number:
**PCT/JP2020/035518**

(87) International publication number:
**WO 2021/060195 (01.04.2021 Gazette 2021/13)**

(54) **WORKING MACHINE**

ARBEITSMASCHINE

ENGIN DE CHANTIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.09.2019 JP 2019174615**

(43) Date of publication of application:
**08.12.2021 Bulletin 2021/49**

(73) Proprietor: **Hitachi Construction Machinery Co., Ltd.**
**Tokyo 110-0015 (JP)**

(72) Inventors:
• **ROH, Joonyoung**
**Tsuchiura-shi, Ibaraki 300-0013 (JP)**
• **SAKAMOTO, Hiroshi**
**Tsuchiura-shi, Ibaraki 300-0013 (JP)**
• **TORIYAMA, Youhei**
**Tsuchiura-shi, Ibaraki 300-0013 (JP)**
• **HAYAKAWA, Naoki**
**Tsuchiura-shi, Ibaraki 300-0013 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
JP-A- 2002 328 022      JP-A- 2011 514 455
JP-A- 2016 212 469      JP-A- 2018 146 594
JP-A- 2019 159 727      JP-A- 2019 159 727
US-A1- 2009 202 109

**Description**

Technical Field

The present invention relates to a working machine, and particularly relates to a working machine that measures the current topography of a construction site for computerization construction and estimates the self-position and posture.
The present application claims priority from Japanese patent application No. 2019-174615 filed on September 25, 2019,

Background Art

At construction sites, computerization construction utilizing information and communication technology is widely used for the purpose of solving the short staffing due to the declining birthrate and improving the production efficiency. During the process of computerization construction, a three-dimensional (3D) finished work at the construction site may be managed for the progress and quality management of the construction. To manage the 3D finished work, the measurement of the 3D finished work is required. To this end, the measurement technology using an unmanned aerial vehicle (UAV) and a total station (TS) also has been developed. To measure the three-dimensional shape at the construction site more frequently, the technology for making the working machine measure the three-dimensional finished work surrounding it has also progressed.
Patent Literature 1 describes a working machine, to which a stereo camera is attached to the swing body, to take images intermittently while swinging. The working machine then estimates the swing angle of the swing body in each of the captured images, and based on the estimated swing angle, creates a three-dimensional synthesized shape surrounding the machine to measure the three-dimensional shape surrounding the working machine. Patent document JP 2019 159727 A is another piece of relevant prior art.

Citation List

Patent Literature

Patent Literature 1: WO 2018/079789

Summary of Invention

Technical Problem

To manage a 3D finished work as described above, a 3D finished work in the construction-site coordinate system is necessary. To this end, the working machine of Patent Literature 1 measures the coordinate values of the working machine in the construction-site coordinate system using a global navigation satellite system (GNSS) antenna based on satellite positioning such as GNSS, and transforms the surrounding 3D shape measured by the working machine to a 3D shape in the construction-site coordinate system.
The transformation of data using the GNSS antenna, however, requires coordinate values in the geographic coordinate system consisting of the latitude, the longitude, and the ellipsoidal height, and a coordinate transformation parameter to transform the coordinate values in the geographic coordinate system into the coordinate values in the construction-site coordinate system. To find the coordinate transformation parameter, localization (position measurement) is necessary, which is a job of measuring the coordinate values in the geographic coordinate system of the known points set at the construction site having the known coordinate values in the construction-site coordinate system. To this end, it is necessary for the operator to visit the construction site, place markers, and measure the coordinate values of the markers in the geographic coordinate system using TS or GNSS. This generates man-hours.
In view of the above problems, the present invention aims to provide a working machine capable of measuring the self-position and posture of the working machine in a construction-site coordinate system and the surrounding topographical shape, while having less man-hours required for localization.

Solution to Problem

A working machine according to the present invention includes: a traveling body that travels; a swing body mounted to the traveling body to be swingable; a working front mounted to the swing body to be rotatable; a design data obtainment unit configured to obtain design data that has topographical data after completion of construction in the form of three-dimensional data; a topography measuring device configured to measure surrounding topographical data in the form of three-dimensional data; and a controller having a design data processor configured to process the topographical data obtained by the design data obtainment unit as a predetermined first coordinate system design data, a current topography data generator configured to generate current topography data of the second coordinate system from the topography data measured by the topography measuring device, the second coordinate system being defined based on the installation position of the topography measuring device, and a position/posture estimation unit configured to estimate a self-position and posture in the second coordinate system based on the current topography data generated by the current topography data generator. The controller is configured to extract peripheral area shape data from the first coordinate system design data, map similar shape portions between the extracted peripheral area shape data and the current topography data, calculate a coordinate transformation matrix to transform from the second coordinate system to the first coordinate system so that the difference in coordinate values of the mapped shape portions is minimized, and transform the self-position and posture of the working machine and the current topography data from coordinates in the second coordinate system to coordinates in the first coordinate system using the calculated coordinate transformation matrix.

Advantageous Effects of Invention

The present invention measures the self-position and posture of the working machine in a construction-site coordinate system and the surrounding topographical shape, while having less man-hours required for localization.

Brief Description of Drawings

Fig. 1 schematically shows a worksite in which a working machine of a first embodiment operates.
Fig. 2 is a side view showing the configuration of a working machine according to the first embodiment.
Fig. 3 shows a hydraulic circuit diagram showing the configuration of the working machine.
Fig. 4 is a schematic diagram of the configuration of a control system of the working machine.
Fig. 5 is a flowchart showing the process by the controller.
Fig. 6 schematically shows an example of the configuration of design data.
Fig. 7 schematically shows an example of the measurement at the start of the construction for survey.
Fig. 8 schematically shows an example of creating design data.
Fig. 9 is a flowchart showing the process by the controller.
Fig. 10 schematically shows an example of extracting a peripheral area.
Fig. 11 is a flowchart showing the process by the controller.
Fig. 12 is a flowchart showing the process by the controller.
Fig. 13 is a flowchart showing the process by the controller.
Fig. 14 is a side view showing an example of extracting key points.
Fig. 15 schematically shows an example of mapping similar shape portions.
Fig. 16 is a flowchart showing the process by the controller.
Fig. 17 is a schematic diagram showing an example of obtaining a coordinate transformation matrix.
Fig. 18 is a flowchart showing the process by the controller.
Fig. 19 schematically shows one example of coordinate transformation.
Fig. 20 is a schematic diagram of the configuration of a control system of a working machine according to a second embodiment.
Fig. 21 is a flowchart showing the process by the controller.
Fig. 22 is a flowchart showing the process by the controller.
Fig. 23 schematically shows an example of extracting a construction area after the construction is completed.
Fig. 24 is a flowchart showing the process by the controller.
Fig. 25 is a schematic diagram of the configuration a control system of a working machine according to a third embodiment.
Fig. 26 is a flowchart showing the process by the controller.

Description of Embodiments

The following describes some embodiments of the working machine according to the present invention, with reference to the drawings. In the following descriptions, upper, lower, left, right, front and rear directions and positions are based on the typical operating state of the working machine, i.e., when the traveling body of the working machine comes in contact with the ground.

[First Embodiment]

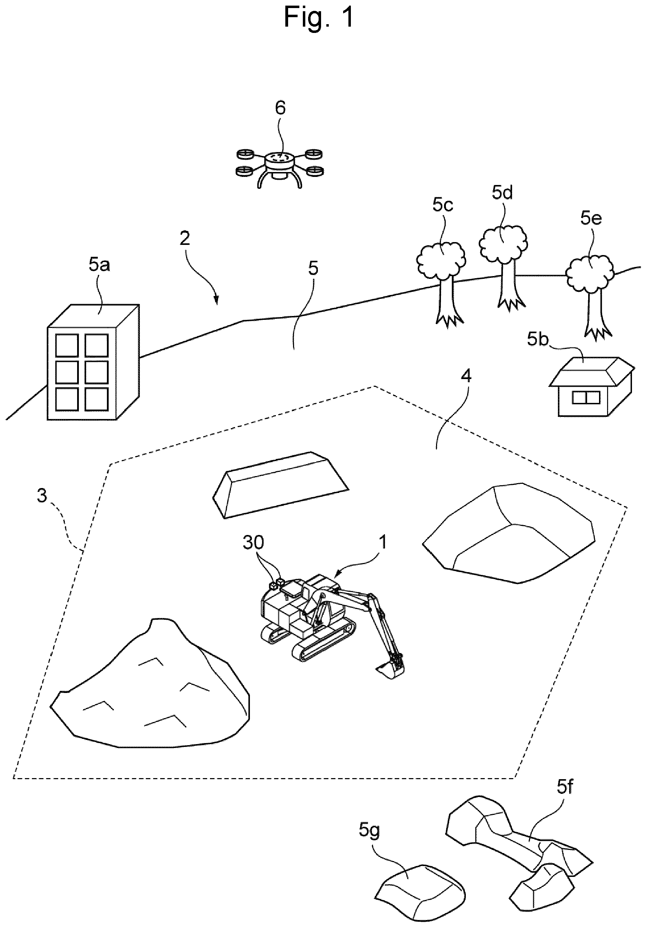

Referring to Fig. 1, the following describes a worksite where the working machine according to a first embodiment operates. As shown in Fig. 1, the worksite includes a working machine 1 that performs computerization construction to a construction target 2, and an unmanned aerial vehicle (UAV) 6 that measures the shape of the construction target 2 while flying over the construction target 2 to measure at the start of construction for survey.

The construction target 2 has a construction boundary 3. The working machine 1 performs construction jobs, including excavation, embankment, and slope shaping to the construction target 2 so that the construction target 2 has a shape according to predetermined design data in the construction area 4 surrounded by the construction boundary 3. A peripheral area 5 surrounds the construction area 4. The peripheral area 5 includes buildings 5a, 5b, natural objects 5c, 5d, 5e, and topographical features 5f, 5g. The working machine 1 does not perform construction in the peripheral area 5 outside of the construction boundary 3, and the shape of the peripheral area 5 does not change by the construction work of the working machine 1.

For computerization construction, various functions are used, including a machine control function of inputting the design data having data on a shape of the construction target 2 after the completion of the construction to a controller 21 (described later) of the working machine 1 and controlling the working machine 1 so that the bucket tip moves along the target construction face set based on the design data, and a finished work management function of measuring the current topography of the construction area 4 using a topography measuring device 30 (described later) installed in the working machine 1 to manage the finished work of the construction area 4.

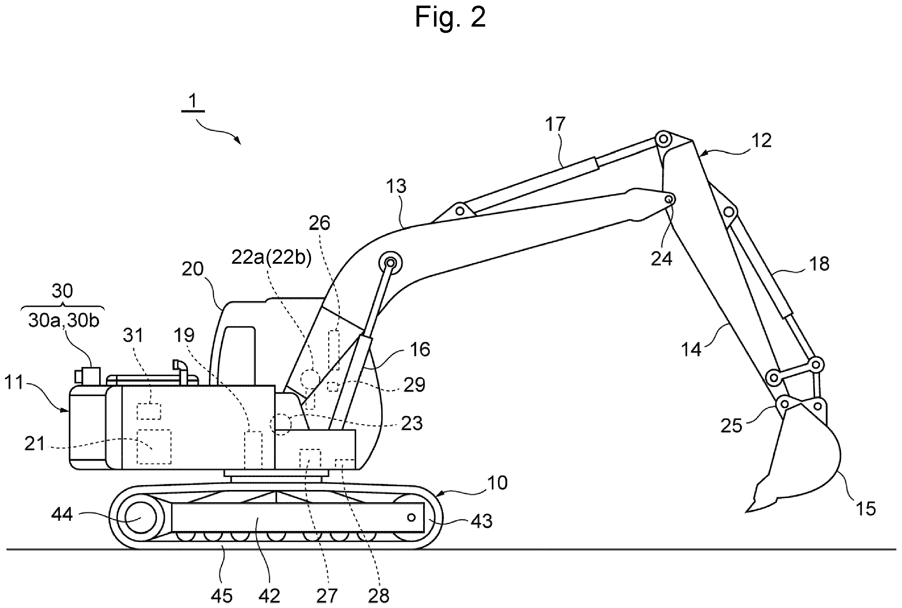

Fig. 2 is a side view showing the configuration of a working machine according to a first embodiment. In one example, the working machine 1 according to the present embodiment is a hydraulic excavator, including a traveling body 10 that can travel, a swing body 11 that swings to the left and right relative to the traveling body 10, and a working front 12 that turns up and down relative to the swing body 11.

The traveling body 10 is placed at a lower part of the working machine 1, and includes a track frame 42, a front idler 43, a sprocket 44, and a track 45. The front idler 43 and the sprocket 44 are disposed on the track frame 42, and the track 45 goes around the track frame 42 via those components.

The swing body 11 is disposed above the traveling body 10. The swing body 11 includes a swing motor 19 for swinging, a cab 20 in which an operator is seated to operate the working machine 1, a controller 21 that controls the operation of the working machine 1, operation levers 22a and 22b in the cab 20, a display device 26 in the cab 20 to display the body information of the working machine 1, and a design data obtainment unit 29 in the cab 20 to obtain design data in the form of three-dimensional data.

The swing body 11 includes a swing gyroscope 27 to obtain the angular velocity around the swing body 11 and a tilt sensor 28 to obtain the tilt angle in the front-rear and left-right directions of the swing body 11. The swing body 11 also includes a topography measuring device 30 that measures the topographical shape around the working machine 1 while swinging. The topographical shape is in the form of three-dimensional topographical data.

In one example, the topography measuring device 30 is a stereo camera having a pair of left and right cameras (cameras 30a and 30b), and is attached to face the rearward of the working machine 1. This topography measuring device 30 is electrically connected to a stereo camera controller 31, and sends the captured stereo image to the stereo camera controller 31. The direction that the topography measuring device 30 faces is not always rearward. The number of the topography measuring device 30 may be one or more. For the topography measuring device 30, a three-dimensional distance measuring sensor may be used instead of the stereo camera.

The stereo camera controller 31 sends a synchronization signal for synchronizing the imaging with the cameras 30a and 30b to the cameras 30a and 30b, performs a calculation of converting the two images from the cameras 30a and 30b into distance information, and transmits the calculated distance information to the controller 21.

The working front 12 includes a boom 13 that is rotatable relative to the swing body 11, an arm 14 at the distal end of the boom 13 to be rotatable, a bucket 15 at the distal end of the arm 14 to be rotatable, a boom cylinder 16 to drive the boom 13, an arm cylinder 17 to drive the arm 14, and a bucket cylinder 18 to drive the bucket 15. A boom angle sensor 23, an arm angle sensor 24, and a bucket angle sensor 25 are attached to the rotation shafts of the boom 13, the arm 14, and the bucket 15, respectively. These angle sensors obtain the rotation angles of the boom 13, the arm 14, and the bucket 15, and output the obtained results to the controller 21.

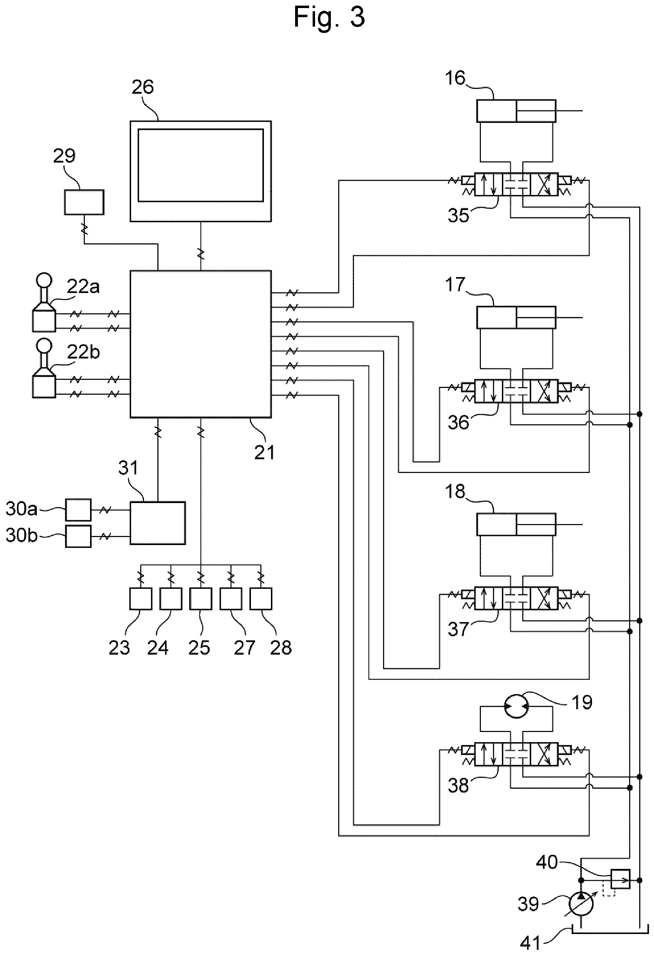

Fig. 3 shows a hydraulic circuit diagram showing the configuration of the working machine. As shown in Fig. 3, the pressure oil in a hydraulic oil tank 41 is discharged by a main pump 39, and is then supplied to the boom cylinder 16, the arm cylinder 17, the bucket cylinder 18, and the swing motor 19 through control valves 35 to 38, respectively. This drives the boom cylinder 16, the arm cylinder 17, the bucket cylinder 18 and the swing motor 19. In one example, the control valves 35 to 38 each includes a solenoid valve, and are controlled by the controller 21.

The pressure oil discharged by the main pump 39 is adjusted through a relief valve 40 so that the pressure does not become excessive. The pressure oil via the cylinders, the swing motor and the relief valve 40 returns to the hydraulic oil tank 41 again.

Receiving the electrical signals output from the operation levers 22a and 22b, the controller 21 converts the electrical signals into appropriate electrical signals to drive the control valves 35 to 38. The opening/closing amount of the control valves 35 to 38 changes with the displacement of the operation levers 22a and 22b. This adjusts the amount of pressure oil supplied to the boom cylinder 16, the arm cylinder 17, the bucket cylinder 18 and the swing motor 19.

In one example, the controller 21 receives signals from the boom angle sensor 23, the arm angle sensor 24, the bucket angle sensor 25, the swing gyroscope 27, the tilt sensor 28, the design data obtainment unit 29, and the stereo camera controller 31. Based on the received signals, the controller 21 calculates the position coordinates of the working machine 1, the posture of the working machine 1, and the surrounding topography of the working machine 1, and makes the display unit 26 display the calculated result.

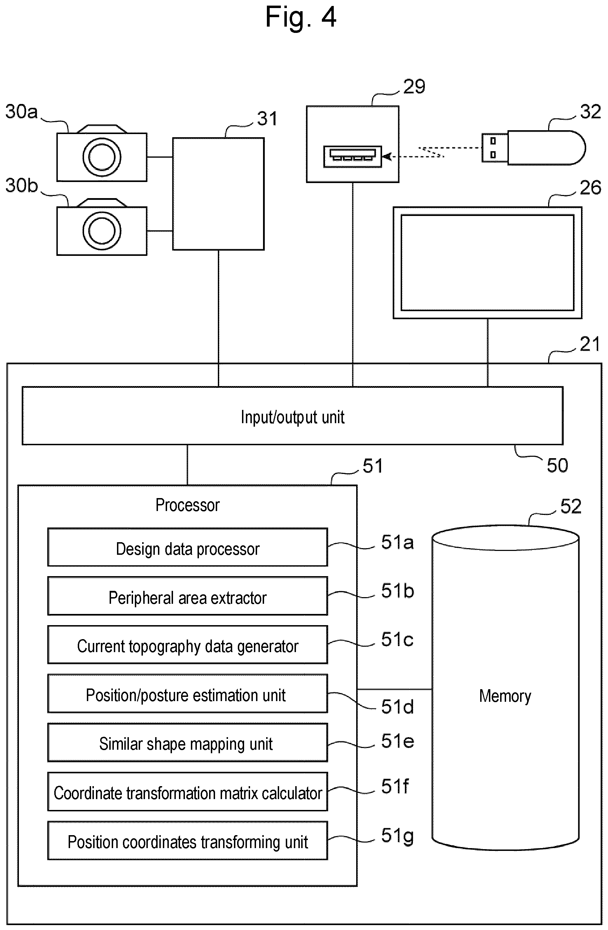

Fig. 4 is a schematic diagram of the configuration of a control system of the working machine. As shown in Fig. 4, the control system of the working machine 1 includes the controller 21, and the stereo camera controller 31, the design data obtainment unit 29, and the display unit 26 that are electrically connected to the controller 21. In one example, the design data obtainment unit 29 is a universal serial bus (USB) port that is connectable to an external storage medium 32.

The controller 21 has an input/output unit 50, a processor 51, and a memory 52. The input/output unit 50 is an interface for connecting the controller 21 to devices such as the stereo camera controller 31, the design data obtainment unit 29, and the display unit 26. The processor 51 includes a microcomputer that is a combination of a central processing unit (CPU) and a graphics processing unit (GPU). The processor 51 further includes a design data processor 51a, a peripheral area extractor 51b, a current topography data generator 51c, a position/posture estimation unit 51d, a similar shape mapping unit 51e, a coordinate transformation matrix calculator 51f, and a position coordinates transforming unit 51g.

The design data processor 51a is configured to read design data, which is data in the design data coordinate system (first coordinate system), from the external storage medium 32 connected to the design data obtainment unit 29 via the input/output unit 50 and to write the read design data in the memory 52. The peripheral area extractor 51b is configured to read the design data stored in the memory 52, extract peripheral area shape data, which is shape data of a peripheral area in which construction is not performed, from the read design data, and write the extracted peripheral area shape data in the memory 52.

The current topography data generator 51c is configured to generate current topography data in the current topography coordinate system (second coordinate system) that is defined based on the installation position of the topography measuring device 30 (that is, the installation position of the working machine 1) based on the topography data measured by the topography measuring device 30 and input from the stereo camera controller 31, and write the generated current topography data in the memory 52. The current topography data relates to the topographical shape surrounding the working machine 1.

The position/posture estimation unit 51d is configured to estimate the self-position and posture of the working machine 1 in the current topography coordinate system based on the current topography data generated by the current topography data generator 51c (hereinafter, "the self-position and posture of the working machine" may be simply called "self-position and posture"), and write the coordinates of the estimated self-position and posture of the working machine 1 in the memory 52.

The similar shape mapping unit 51e is configured to search for similar shape portions between the peripheral area shape data extracted by the peripheral area extractor 51b and the current topography data generated by the current topography data generator 51c, and to map these searched similar shape portions. The coordinate transformation matrix calculator 51f is configured to calculate a coordinate transformation matrix that transforms from the current topography coordinate system to the design data coordinate system using the similar shape portions of the peripheral area shape data and the current topography data that are mapped by the similar shape mapping unit 51e so that the difference in coordinate values of the mapped similar shape portions is minimized, and to write the calculated coordinate transformation matrix in the memory 52.

The position coordinates transforming unit 51g is configured to transform the self-position and posture estimated by the position/posture estimation unit 51d and the current topography data from the coordinates of the current topography coordinate system to the coordinates of the design data coordinate system using the coordinate transformation matrix calculated by the coordinate transformation matrix calculator 51f.

The memory 52 includes a memory such as a random access memory (RAM) and a storage such as a hard disk drive or a solid state drive. This memory 52 is electrically connected to the processor 51 so that the processor 51 is able to write and read data there. In one example, the memory 52 stores the source codes of software to perform various process by the processor 51.

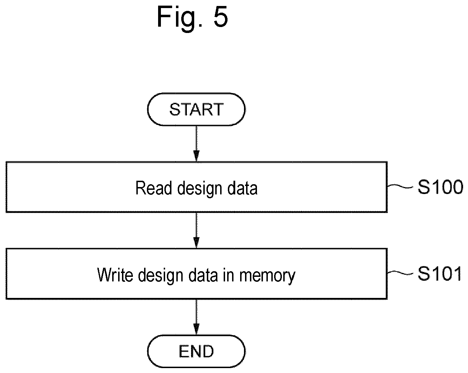

Next, referring to Fig. 5 to Fig. 22, the following describes the control process by the controller 21. The controller 21 executes the control process at a constant period, for example.

Fig. 5 is a flowchart showing the process by the design data processor 51a of the processor 51. As shown in Fig. 5, in step S100, the design data processor 51a reads the design data from the external storage medium 32 connected to the design data obtainment unit 29 via the input/output unit 50.

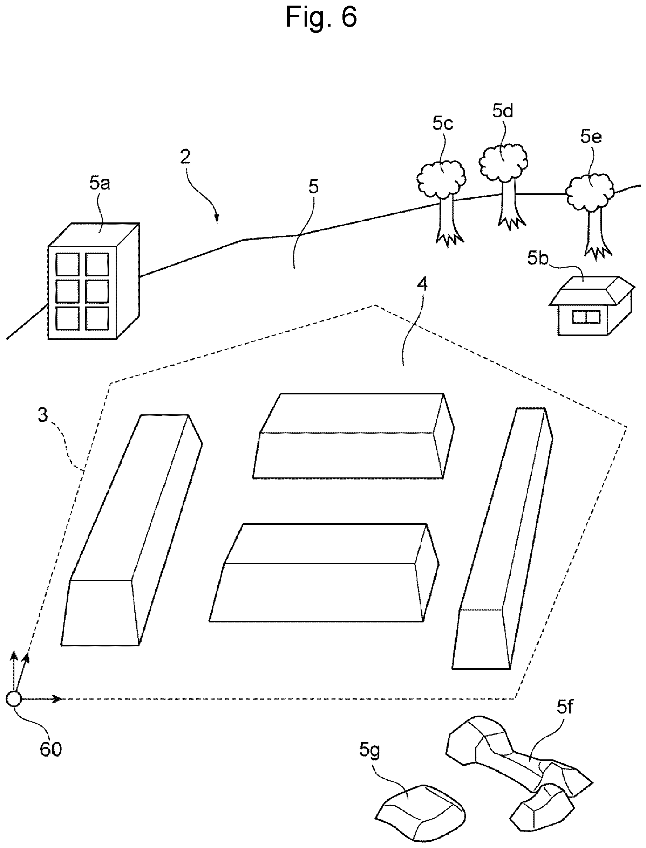

Referring now to Fig. 6 to Fig. 8, an example of the design data is described. The design data is the data on the construction target 2 after the completion of the construction. The design data includes information on the topography data, a reference point 60 of the construction-site coordinate system, and the construction boundary 3, and also includes information on whether the shape of the design data corresponds to the construction area 4 or the peripheral area 5. In this example, the construction is performed in the design data coordinate system. The construction-site coordinate system is therefore the same as the design data coordinate system, meaning that the design data is in the construction-site coordinate system. In the following description, the design data coordinate system may be referred to as the construction-site coordinate system.

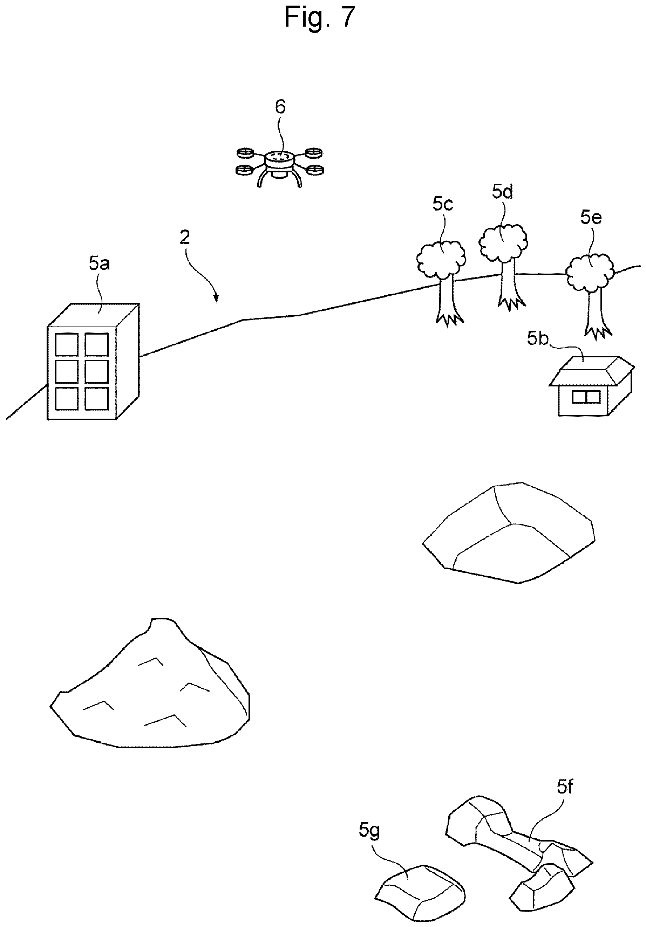

The design data is created using the pre-construction topographical data measured at the start of the construction for survey and the drawing data for the construction. Fig. 7 schematically shows an example of the measurement at the start of construction for survey. During the measurement at the start of construction for survey, the topographical shape of the construction target 2 before construction is measured using the UAV 6. The UAV 6 is equipped with measurement instruments such as a laser scanner and a camera facing downward so that, looking down from the UAV 6, the UAV 6 can measure the topographical shape of the construction target 2.

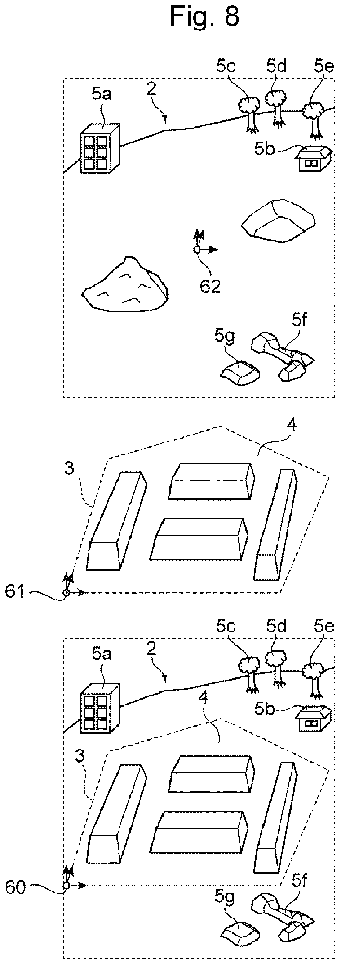

Fig. 8 schematically shows an example of creating design data, and the upper part of Fig. 8 shows the topographical data of the construction target 2 before construction. This pre-construction topographical data includes a reference point 62 in the pre-construction topography data coordinate system. The middle part of Fig. 8 shows the drawing data of construction created by CAD or the like. This construction drawing contains information on a reference point 61 and the construction boundary 3. The lower part of Fig. 8 shows the design data. The design data is about the shape of the construction target 2 after the completion of the construction, which is created by overlapping the drawing data on the pre-construction topography data. For the reference point 60 of the created design data coordinate system, the reference point 61 in the coordinate system of the construction drawing is used. The design data created by the designer, the construction manager, or the like is stored in the external storage medium 32, and is loaded into the controller 21 via the design data obtainment unit 29.

In step S101 following step S100, the design data processor 51a writes the read design data in the memory 52.

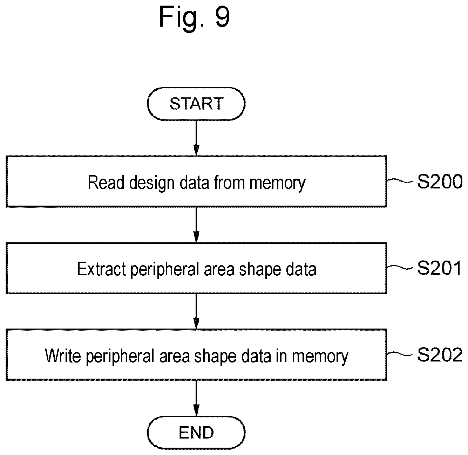

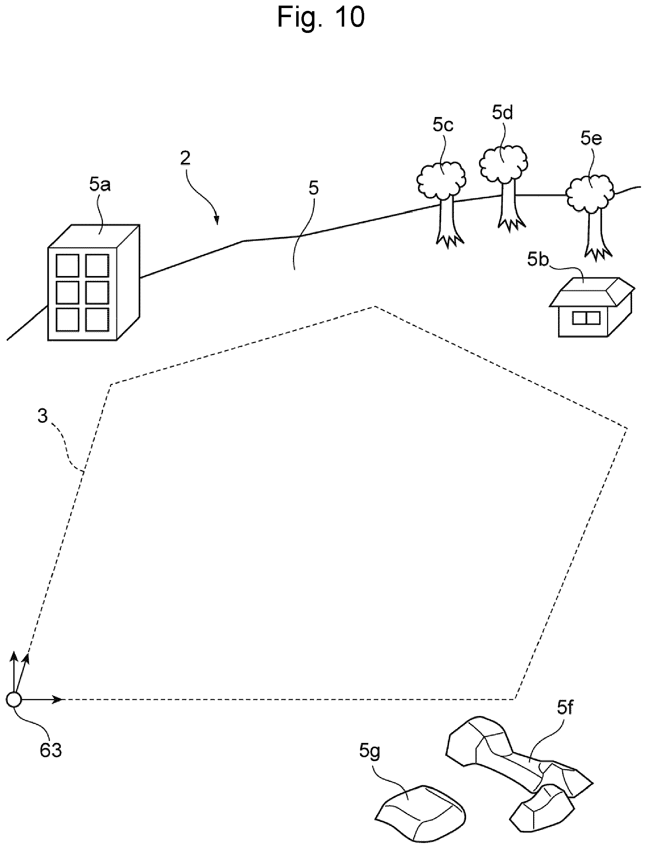

Fig. 9 is a flowchart showing the process by the peripheral area extractor 51b. As shown in Fig. 9, in step S200, the peripheral area extractor 51b reads the design data from the memory 52. In step S201 following step S200, the peripheral area extractor 51b extracts peripheral area shape data from the read design data. The peripheral area shape data is about the peripheral area 5 excluding the construction area 4, and can be easily extracted using the information on the construction boundary 3, the construction area 4, and the peripheral area 5 included in the design data. Fig. 10 shows an example of the peripheral area shape data extracted from the design data. The reference point 63 of the coordinate system of the peripheral area shape data is the same as the reference point 60 in the design data coordinate system (see Fig. 6).

In step S202 following step S201, the peripheral area extractor 51b writes the extracted peripheral area shape data in the memory 52.

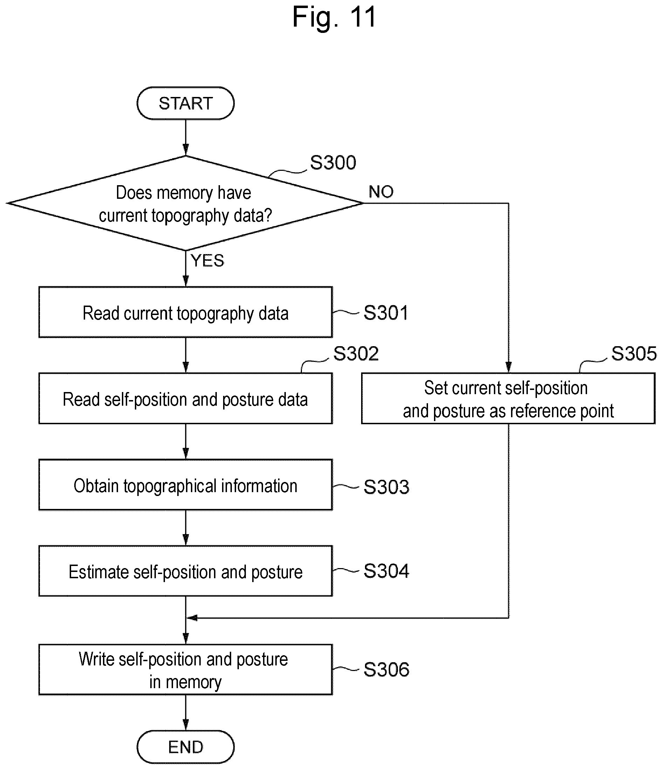

Referring next to Fig. 11 to Fig. 13, the following describes generation of the current topography data by the current topography data generator 51c and estimation of the self-position and posture of the working machine 1 by the position/posture estimation unit 51d using simultaneous localization and mapping (SLAM) technology, which is often used in the field of mobile robots. The position/posture estimation unit 51d estimates the self-position and posture of the working machine 1 using the same coordinate system as in the current topography data generated by the current topography data generator 51c (i.e., the current topography coordinate system).

Fig. 11 is a flowchart by the position/posture estimation unit 51d to estimate the self-position and posture. As shown in Fig. 11, in step S300, the position/posture estimation unit 51d determines whether or not the current topography data written by the current topography data generator 51c exists in the memory 52. If it is determined that the current topography data exists in the memory 52, the control process proceeds to step S301. If it is determined that the data does not exist, the control process proceeds to step S305.

In step S301, the position/posture estimation unit 51d reads the current topography data from the memory 52. In step S302 following step S301, the position/posture estimation unit 51d reads the self-position and posture data one cycle before the process by the position/posture estimation unit 51d from the memory 52.

In step S303 following step S302, the position/posture estimation unit 51d obtains topographical information from the stereo camera controller 31. For example, the position/posture estimation unit 51d obtains topographical information (i.e., topography data) in the measurement range of the topography measuring device 30 from the stereo camera controller 31.

In step S304 following step S303, the position/posture estimation unit 51d estimates the self-position and posture of the working machine 1 in the current topography data coordinate system based on the current topography data read in step S301. For example, the position/posture estimation unit 51d uses the current topography data read in step S301 and the self-position and posture data one cycle before read in step S302, and estimates the self-position and posture from the topographical information obtained in step S303 in the vicinity of the position one cycle before using the shape matching technique so that the topographical information obtained in step S303 can be obtained. The position/posture estimation unit 51d may calculate the optical flow using the images obtained from the topography measuring device 30 to estimate the self-position and posture.

In step S306 following step S304, the position/posture estimation unit 51d writes the self-position and posture in the current topography coordinate system estimated in step S304 in the memory 52.

In step S305, the position/posture estimation unit 51d sets the self-position and posture at the timing of performing the control process (that is, the current self-position and posture) as the reference point of the current topography coordinate system. Then, the set reference point serves as the reference point of the current topography data generated by the current topography data generator 51c. In step S306 following step S305, the position/posture estimation unit 51d writes the self-position and posture in the current topography coordinate system set in step S305 in the memory 52.

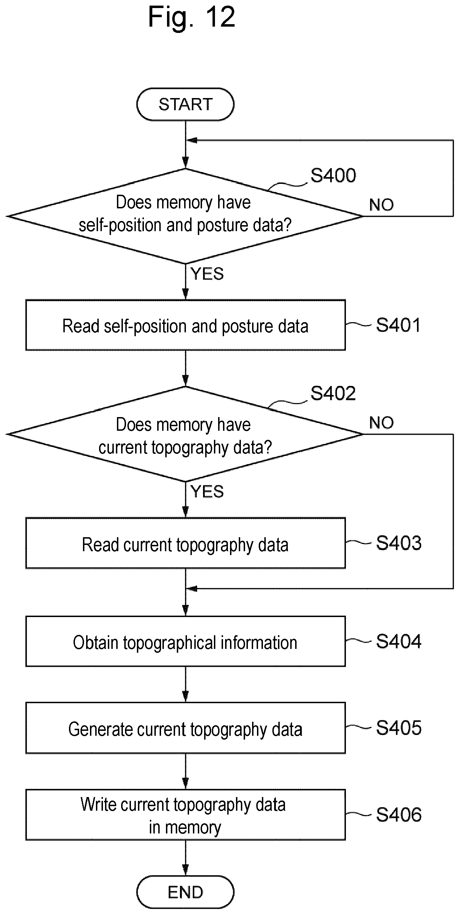

Fig. 12 is a flowchart by the current topography data generator 51c to generate current topography data. As shown in Fig. 12, in step S400, the current topography data generator 51c determines whether the self-position and posture data exists in the memory 52. If it is determined that the self-position and posture data exists in the memory 52, the control process proceeds to step S401. If it is determined that the data does not exist, step S400 is repeated.

In step S401 following step S400, the current topography data generator 51c reads the self-position and posture data from the memory 52. In step S402 following step S401, the current topography data generator 51c determines whether or not the current topography data exists in the memory 52. If it is determined that the current topography data exists in the memory 52, the control process proceeds to step S403. If it is determined that the data does not exist, the control process proceeds to step S404.

In step S403 following step S402, the current topography data generator 51c reads the current topography data from the memory 52. In step S404 following step S403, the current topography data generator 51c obtains topographical information (i.e., topography data) in the measurement range of the topography measuring device 30 from the stereo camera controller 31.

In step S405 following step S404, the current topography data generator 51c generates the current topography data surrounding the working machine 1. Specifically, the current topography data generator 51c uses the current topography data read in step S403, the self-position and posture data read in step S401, and the positional relationship between the self-position and posture and the topography measuring device 30 to calculate the position and posture of the topography measuring device 30 in the working machine 1 in the current topography coordinate system. The current topography data generator 51c then transforms the topography data obtained in step S404 into the topography data in the current topography coordinate system to generate and update the current topography data. The current topography data is updated when the topography data measured by the topography measuring device 30 overlaps with the previous current topography data.

In step S406 following step S405, the current topography data generator 51c writes the current topography data generated in step S405 in the memory 52.

The process by the position/posture estimation unit shown in Fig. 11 and the process by the current topography data generator shown in Fig. 12 have a parallel relationship. That is, the process by the position/posture estimation unit 51d uses the result generated by the current topography data generator 51c, and the process by the current topography data generator 51c uses the result estimated by the position/posture estimation unit 51d.

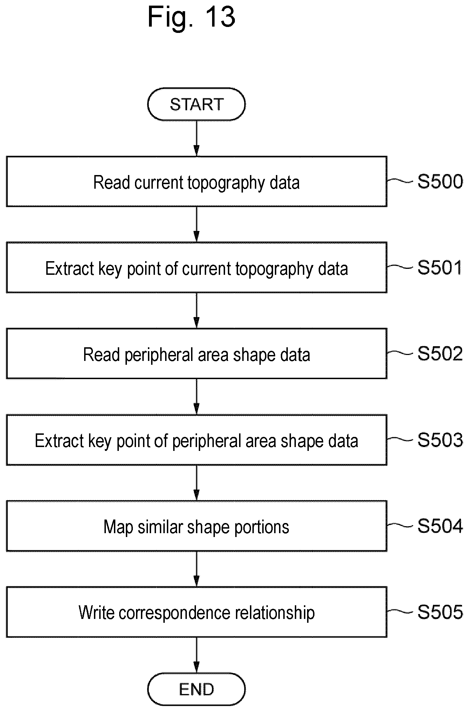

Referring now to Fig. 13 to Fig. 15, the following describes the process by the similar shape mapping unit 51e of searching for a similar shape portion between the peripheral area shape data extracted by the peripheral area extractor 51b and the current topography data generated by the current topography data generator 51c, and mapping these similar shape portions.

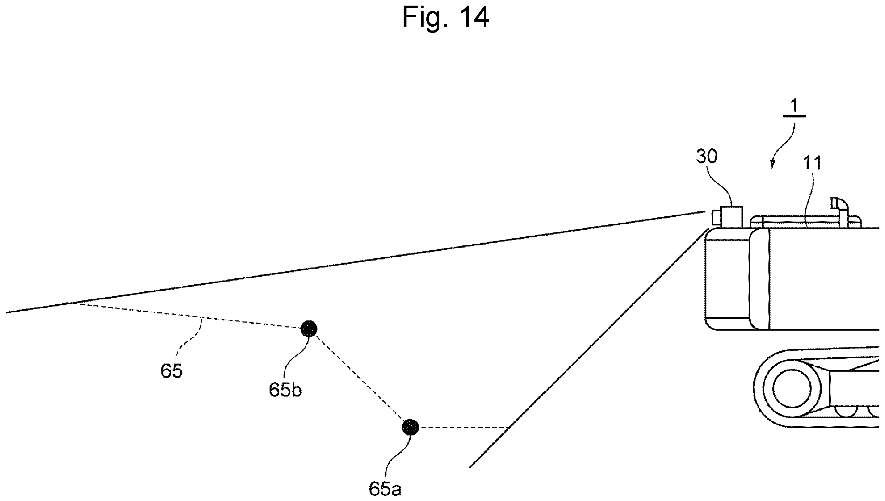

Fig. 13 is a flowchart showing the process by the similar shape mapping unit 51e. As shown in Fig. 13, in step S500, the similar shape mapping unit 51e reads the current topography data generated by the current topography data generator 51c from the memory 52. In step S501 following step S500, the similar shape mapping unit 51e extracts a key point of the current topography data from the current topography data read in step S500. The key point is a characteristic point, e.g., a point in the topography where the inclination changes abruptly, or an apex. For example, as shown in Fig. 14, the topography data 65 measured by the topography measuring device 30 installed in the swing body 11 includes points 65a and 65b at which the inclination of the topography changes, and these points are the key points. Key points can also be extracted using algorithms such as Uniform Sampling if the topography is point cloud information.

In step S502 following step S501, the similar shape mapping unit 51e reads the peripheral area shape data extracted by the peripheral area extractor 51b from the memory 52. In step S503 following step S502, the similar shape mapping unit 51e extracts key points of the peripheral area shape data read in step S502.

In step S504 following step S503, the similar shape mapping unit 51e maps similar shape portions between the peripheral area shape data and the current topography data. Specifically, the similar shape mapping unit 51e compares the key points of the current topography data extracted in step S501 with the key points of the peripheral area shape data extracted in step S503, and searches for a portion having similar shapes (i.e., similar shape portions) by matching sequentially, and maps these similar shape portions.

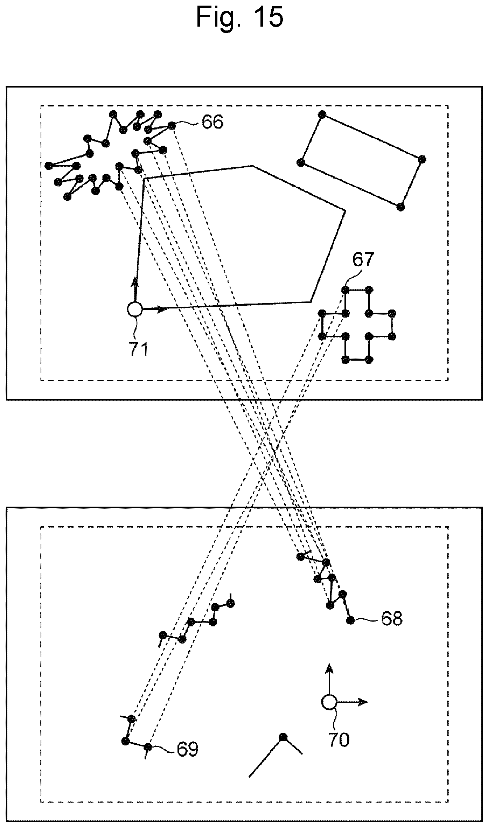

Fig. 15 shows an example of the process of mapping similar shape portions. The upper part of Fig. 15 shows shape data of the surrounding topography and its key points, and the lower part of Fig. 15 shows the current topography data and its key points. Using the positional relationship between the key points in the upper and lower parts of Fig. 15 enables mapping of the similar shape portions. For example, the key point 66 in the upper part of Fig. 15 and the key point 68 in the lower part of Fig. 15 have a correspondence relationship, and the key point 67 in the upper part of Fig. 15 and the key point 69 in the lower part of Fig. 15 have a correspondence relationship. Reference numerals 70 and 71 in Fig. 15 denote reference points of the coordinate system.

In step S505 following step S504, the similar shape mapping unit 51e writes the correspondence relationship between the peripheral area shape data and the current topography data (in other words, the mapped similar shape portions) obtained in step S504 in the memory 52.

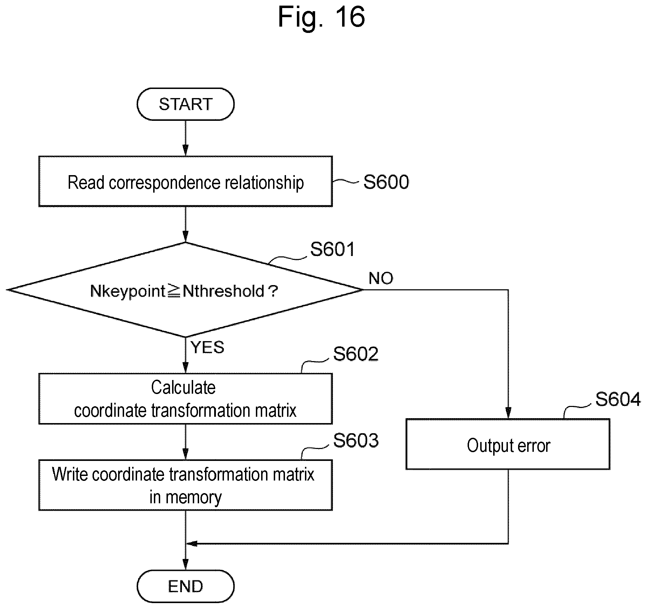

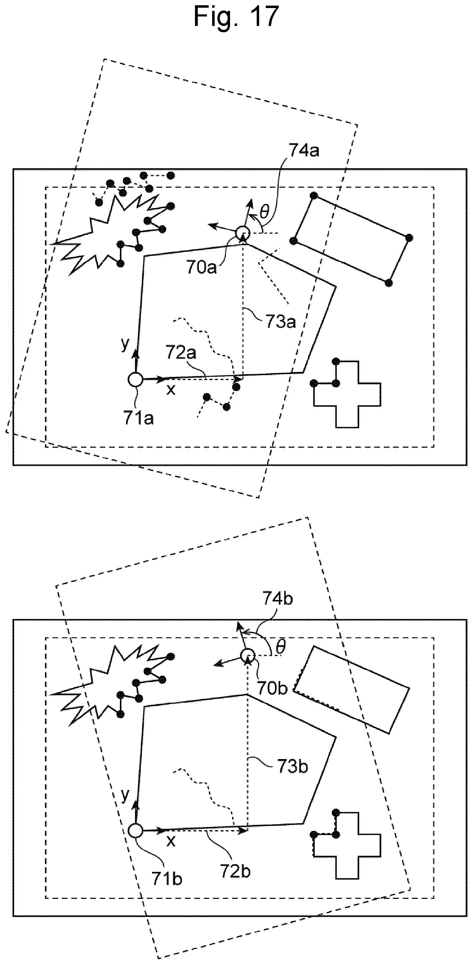

Referring next to Fig. 16 and Fig. 17, the following describes the process of calculating a coordinate transformation matrix to transform from the current topography coordinate system to the construction-site coordinate system, which is the coordinate system of the peripheral area shape data, using the above-mentioned correspondence relationship between the peripheral area shape data and the current topography data.

Fig. 16 is a flowchart showing the process by the coordinate transformation matrix calculator 51f. As shown in Fig. 16, in step S600, the coordinate transformation matrix calculator 51f reads the correspondence relationship between the peripheral area shape data and the current topography data from the memory 52. In step S601 following step S600, the coordinate transformation matrix calculator 51f compares the number of mapped key points (Nkeypoint) with a predetermined threshold (Nthreshold).

There may be no key points mapped between the generated current topography data and the peripheral area shape data, or the number of mapped key points may be too small to uniquely determine the positioning between the peripheral area shape data and the generated current topography data. The threshold (Nthreshold) is set to prevent the failure of positioning of the key points between the peripheral area shape data and the current topography in these cases. For example, for a two-dimensional shape, Nthreshold=3 because three pairs of key points are required to be mapped for positioning, and for a three-dimensional shape, Nthreshold=4 because four pairs of key points are required. The threshold (Nthreshold) may be larger than 3 or 4.

If the number of mapped key points (Nkeypoint) is equal to or greater than the threshold (Nthreshold), the control process proceeds to step S602. If the number of the mapped key points (Nkeypoint) is less than the threshold (Nthreshold), the control process proceeds to step S604.

In step S602, the coordinate transformation matrix calculator 51f performs positioning of the peripheral area shape data with the current topography data generated by the current topography data generator 51c, and calculates a coordinate transformation matrix. For example, in the case of two-dimensional shape data, the coordinate transformation matrix calculator 51f obtains a coordinate transformation matrix H that represents the positional relationship between the reference point of the peripheral area shape data and the reference point of the current topography data. The coordinate transformation matrix H is obtained by the following equation (1) using the translation matrix T, rotation matrix R and scaling matrix S.

$$H = T \times R \times S \qquad \text{Equation (1)}$$

Using the values of translation x in the x direction, translation y in the y direction, rotation angle $\theta$, and scaling factor s for the translation matrix T, rotation matrix R, and scaling matrix S in equation (1), the following equations (2) to (4) will be obtained:

$$T = \begin{pmatrix} 1 & 0 & x; \\ 0 & 1 & y; \\ 0 & 0 & 1 \end{pmatrix} \qquad \text{Equation (2)}$$

$$R = \begin{pmatrix} \cos(\theta) & -\sin(\theta) & 0; \\ \sin(\theta) & \cos(\theta) & 0; \\ 0 & 0 & 1 \end{pmatrix} \qquad \text{Equation (3)}$$

$$S= \quad (s \quad 0 \quad 0;$$
$$0 \quad s \quad 0;$$
$$0 \quad 0 \quad 1) \qquad \text{Equation (4)}$$

In these equations, x and y of the translation matrix T, $\theta$ of the rotation matrix R, and s of the scaling matrix S can be calculated using algorithms such as iterative closest point (ICP), Softassign, and EM-ICP. For example, the key points of the current topography data are converted into coordinate values in the construction-site coordinate system, using the mapped key points. Then, x, y, $\theta$, and s that minimize the distance between the key points of the current topography data in the construction-site coordinate system and the corresponding key points of the peripheral area shape data are calculated by iterative operation. Thus, the coordinate transformation matrix H is obtained using the translation matrix T, rotation matrix R and scaling matrix S.

When transforming the coordinate values (X1, Y1) in the current topography coordinate system to the coordinate values (X2, Y2) in the construction-site coordinate system, the calculation can be made using the following equation (5).

$$tr(X2 \ Y2 \ 1)=H \times tr(X1 \ Y1 \ 1) \qquad \text{Equation (5)}$$

Fig. 17 shows an example of the peripheral area shape data and the current topography data after mapping. In this example, the translation 72a, 72b in the x direction, the translation 73a, 73b in the y direction, the rotation angle 74a, 74b, and the scaling factor s are obtained so that the distance between the mapped key points after coordinate transformation is minimized, in other words, the difference in the coordinate values of the mapped similar shape portions is minimized. The scaling factor s is the reciprocal of the enlarged magnification. For example, when the current topography coordinate system is enlarged double, s becomes 0.5. Fig. 17 shows an example of the scaling factor s=1. In this example, the distance between the mapped key points is smaller in the lower part than in the upper part of Fig. 17. This means that 72b, 73b, and 74b in the lower part of Fig. 17 are appropriate for x, y, $\theta$, and s for obtaining the coordinate transformation matrix H. In Fig. 17, reference numerals 70a, 70b, 71a, and 71b denote reference points of the coordinate system.

In step S603 following step S602, the coordinate transformation matrix calculator 51f writes the coordinate transformation matrix H calculated in step S602 in the memory 52. In step S604, the coordinate transformation matrix calculator 51f performs error processing. For example, the coordinate transformation matrix calculator 51f displays a message such as "Insufficient measurement points; run or turn the working machine" on the display unit 26 via the input/output unit 50.

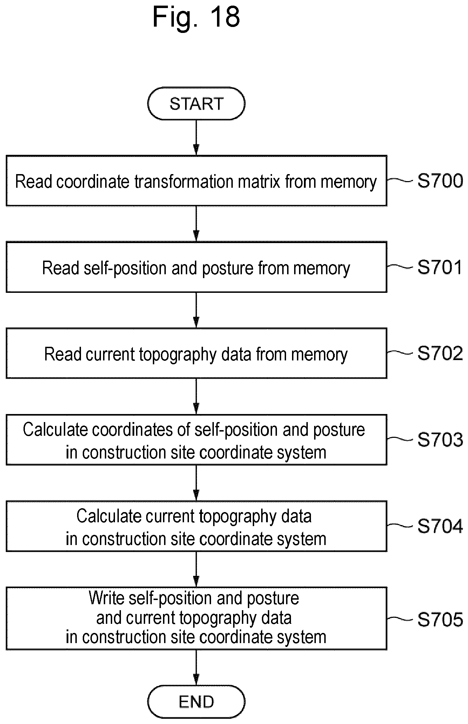

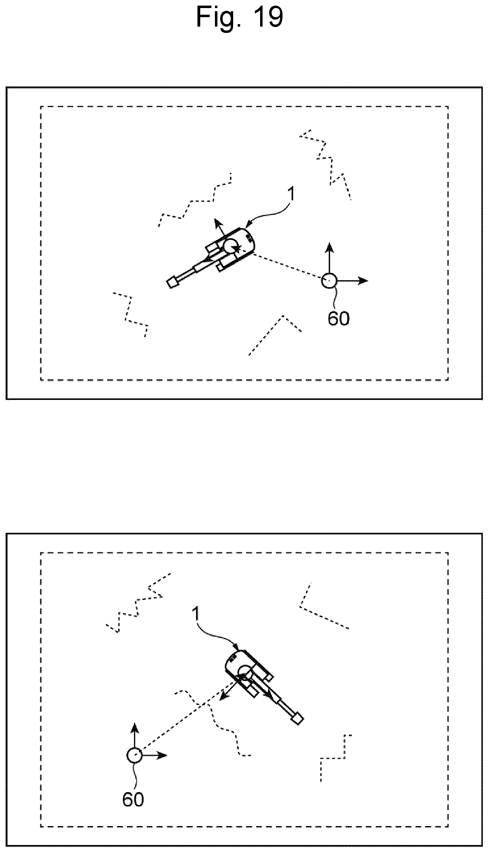

Referring next to Fig. 18 and Fig. 19, the following describes the process by the position coordinates transforming unit 51g of calculating coordinate values of the working machine position in the construction-site coordinate system using the coordinate transformation matrix H.

Fig. 18 is a flowchart showing the process by the position coordinates transforming unit 51g. As shown in Fig. 18, in step S700, the position coordinates transforming unit 51g reads the coordinate transformation matrix H from the memory 52. In step S701 following step S700, the position coordinates transforming unit 51g reads the self-position and posture in the current topography coordinate system that are estimated by the position/posture estimation unit 51d from the memory 52. In step S702 following step S701, the position coordinates transforming unit 51g reads the current topography data generated by the current topography data generator 51c from the memory 52.

In step S703 following step S702, the position coordinates transforming unit 51g calculates the coordinates P2 of the self-position and posture in the construction-site coordinate system by the following equation (6), based on the coordinate transformation matrix H read in step S700 and the coordinates P1 of the self-position and posture in the current topography coordinate system read in step S701.

$$P2=H \times P1 \qquad \text{Equation (6)}$$

Assuming that the azimuth angle of the working machine 1 in the current topography coordinate system is $\theta1$ and the azimuth angle of the working machine 1 in the construction-site coordinate system is $\theta2$, the azimuth angle $\theta2$ of the working machine 1 can be obtained by equation (7) using $\theta$ in the coordinate transformation matrix H.

$$\theta2=\theta1+\theta \qquad \text{Equation (7)}$$

In step S704 following step S703, the position coordinates transforming unit 51g calculates the current topography data in the construction-site coordinate system using the coordinate transformation matrix H read in step S700 and the current topography data read in step S702. For example, when the current topography data is represented by a point cloud, the position coordinates transforming unit 51g calculates the current topography data in the construction-site coordinate system by transforming the coordinate values of the point cloud in the current topography coordinate system with the coordinate transformation matrix H.

Fig. 19 shows an example of the current topography data and the self-position and posture in the current coordinate system calculated by the position coordinates transforming unit 51g. In Fig. 19, the upper part shows the current topography data generated by the current topography data generator 51c and the self-position and posture estimated by the position/posture estimation unit 51d. Transformation of coordinates using the coordinate transformation matrix H in step S703 and step S704 obtains the current topography data in the construction-site coordinate system and the self-position and posture in the construction-site coordinate system as shown in the lower part of Fig. 19.

In step S705 following step S704, the position coordinates transforming unit 51g writes the coordinates of the self-position and posture in the construction-site coordinate system calculated in step S703 and the current topography data in the construction-site coordinate system calculated in step S704 in the memory 52.

In the working machine 1 of the present embodiment, the processor 51 of the controller 21 includes: the peripheral area extractor 51b that extracts peripheral area shape data from the design data in the construction-site coordinate system; the similar shape mapping unit 51e that searches for and maps similar shape portions between the extracted peripheral area shape data and the current topography data in the current topography coordinate system: the coordinate transformation matrix calculator 51f that calculates a coordinate transformation matrix to transform from the current topography coordinate system to the construction-site coordinate system so that the difference in coordinate values of the mapped similar shape portions is minimized; and the position coordinates transforming unit 51g that transforms the self-position and posture of the working machine 1 and the current topography data from the coordinates of the current topography coordinate system to the coordinates of the construction-site coordinate system using the calculated coordinate transformation matrix. In this way, the present embodiment reduces the man-hours required for localization because a peripheral area whose shape is unchanged by construction is used, and the present embodiment measures the self-position and posture of the working machine 1 in the construction-site coordinate system and the surrounding topographical shape.

[Second Embodiment]

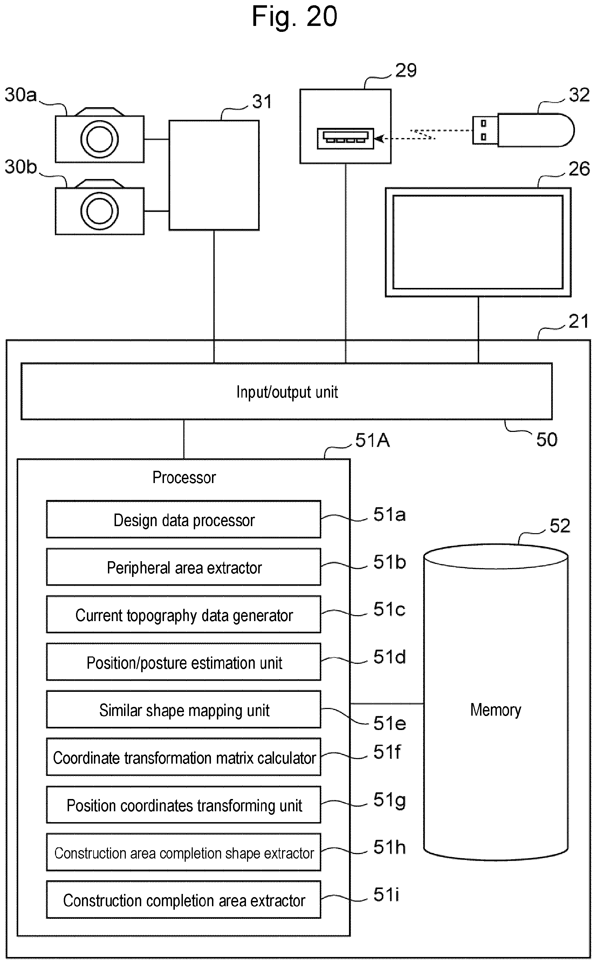

Referring to Fig. 20 to Fig. 24, the following describes a second embodiment of the working machine. A working machine 1A of the present embodiment is different from the first embodiment described above in that the processor 51A further has a construction area completion shape extractor 51h and a construction completion area extractor 51i. The other structure is the same as the first embodiment, and the duplicate explanations are omitted.

Fig. 20 is a schematic diagram of the configuration of a control system of a working machine according to the second embodiment. As shown in Fig. 20, the processor 51A of the working machine 1A further has the construction area completion shape extractor 51h and the construction completion area extractor 51i.

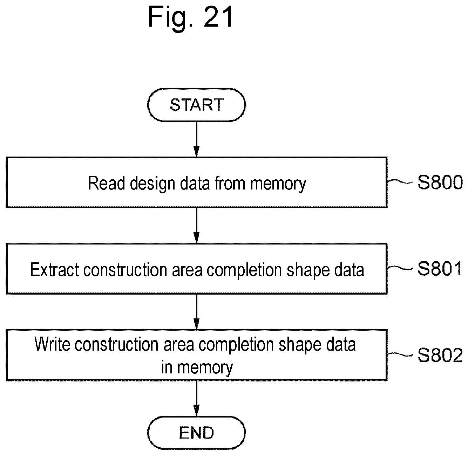

Referring first to Fig. 21, the following describes of the process by the construction area completion shape extractor 51h of extracting the shape data after the completion of construction in the construction area from the design data.

Fig. 21 is a flowchart showing the process by the construction area completion shape extractor 51h. As shown in Fig. 21, in step S800, the construction area completion shape extractor 51h reads the design data written by the design data processor 51a from the memory 52. In step S801 following step S800, the construction area completion shape extractor 51h extracts the shape data after the completion of construction in the construction area 4 (i.e., construction area completion shape data) from the design data as shown in Fig. 6. The construction area completion shape data can be easily extracted using information on the construction boundary 3, construction area 4, and peripheral area 5 contained in the design data. The reference point of the construction area completion shape data coordinate system is the same as the reference point 60 in the design data coordinate system. The construction area completion shape data also contains information on the construction boundary 3.

In step S802 following step S801, the construction area completion shape extractor 51h writes the extracted construction area completion shape data in the memory 52.

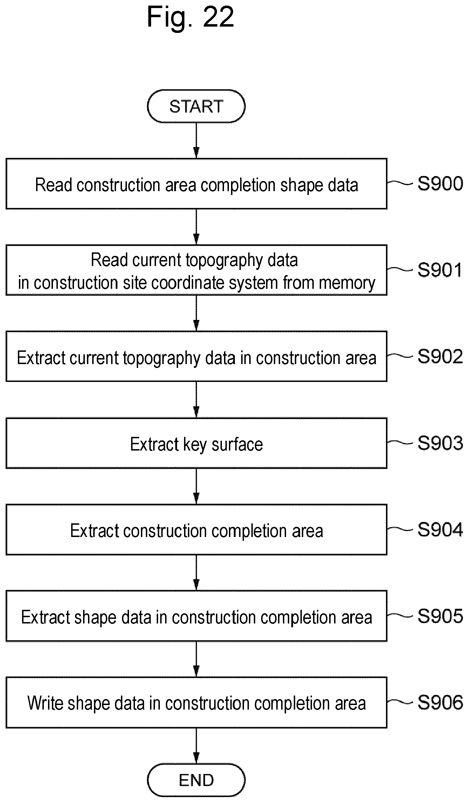

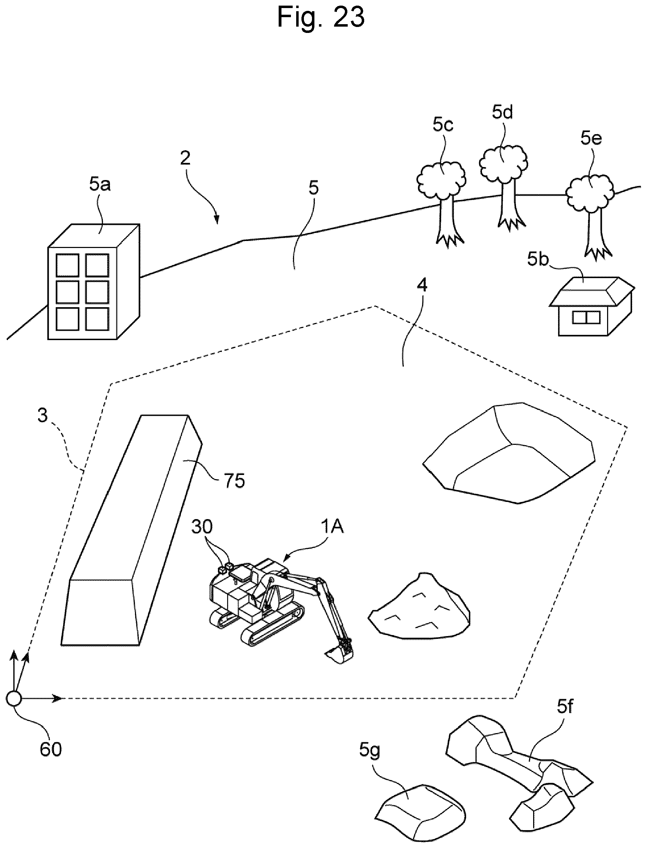

Referring next to Fig. 22 and Fig. 23, the following describes of the process by the construction completion area extractor 51i of determining whether or not the construction is completed at a part of the construction target in the construction area 4, and extracting the area that is determined as the completion of construction.

Fig. 22 is a flowchart showing the process by the construction completion area extractor 51i. As shown in Fig. 22, in step S900, the construction completion area extractor 51i reads the construction area completion shape data written by the construction area completion shape extractor 51h from the memory 52. In step S901 following step S900, the construction completion area extractor 51i reads the current topography data in the construction-site coordinate system written by the position coordinates transforming unit 51g from the memory 52.

In step S902 following step S901, the construction completion area extractor 51i extracts the current topography data in the construction site using the data on the construction boundary 3 of the construction area completion shape data read in step S900 and the current topography data read in step S901. The coordinate system of the data on the construction boundary 3 and the coordinate system of the current topography data are the same, which allows the process to easily obtain the current topography data in the construction area.

In step S903 following step S902, the construction completion area extractor 51i further extracts a key surface of the construction area completion shape data read in step S900 and of the current topography data in the construction area extracted in step S902. The key surface is a surface that is determined to be a plane surrounded by the key points in the shape data, for example. When the plane extracted from the shape data using the RANdom sample consensus (RANSAC) algorithm is surrounded by key points, that plane can be obtained as the key surface.

In step S904 following step S903, the construction completion area extractor 51i compares the coordinate values of the key surface of the construction area completion shape data and of the key surface of the current topography data in the construction area extracted in step S903 to extract the construction completion area. For example, as shown in Fig. 23, when the topography measuring device 30 measures a slope 75 as the current topographic data at the construction site having the completed slope 75 in the construction area 4, this completed slope 75 is obtained in step S903 as the key surface of the current topographic data in the construction area.

Since the construction area completion shape data is the shape after the completion of construction, the key surface of the construction area completion shape data always includes the slope 75. For the common key surface of the construction area completion shape data and the current topography data in the construction area, the current topography can be considered as the shape after the construction is completed, which means that the common key surface can be determined as the construction completion area. The construction completion area extractor 51i therefore extracts the common key surface as the construction completion area.

In step S905 following step S904, the construction completion area extractor 51i further extracts the shape data of the construction completion area extracted in step S904. For example, the construction completion area extractor 51i extracts the shape data corresponding to the construction completion area from the construction area completion shape data read in step S900. The reference point of the coordinate system for the shape data of the construction completion area is the same as the reference point 60 in the design data coordinate system. In step S906 following step S905, the construction completion area extractor 51i writes the shape data of the construction completion area extracted in step S905 in the memory 52.

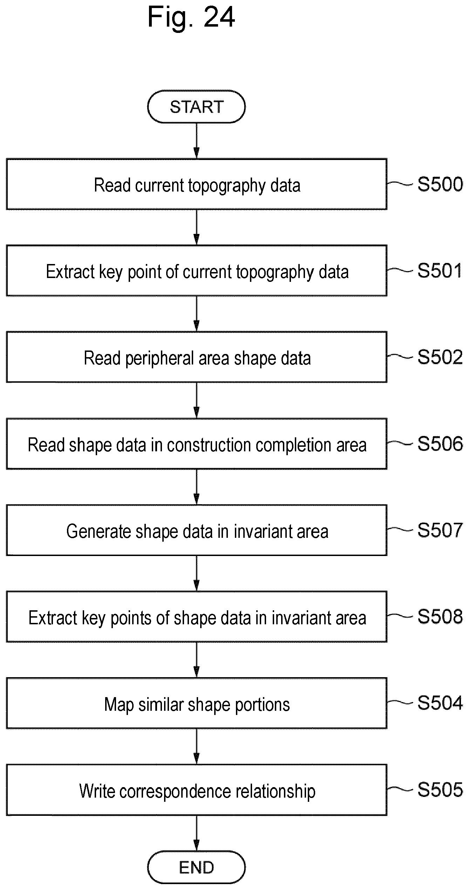

In the present embodiment, the processor 51A of the working machine 1A further has the construction area completion shape extractor 51h and the construction completion area extractor 51i. The process by the similar shape mapping unit 51e therefore is different from the process by the similar shape mapping unit 51e described in the first embodiment. Specifically, as shown in Fig. 24, the process by the similar shape mapping unit 51e of the present embodiment includes step S506 and step S507 added between step S502 and step S503 of the flowchart of Fig. 13 in the first embodiment, and step S503 shown in Fig. 13 is replaced with step S508. The following describes only the added and replaced process.

In step S506, the similar shape mapping unit 51e reads the shape data of the construction completion area extracted by the construction completion area extractor 51i from the memory 52. In step S507 following step S506, the similar shape mapping unit 51e synthesizes the shape data of the construction completion area read in step S506 with the peripheral area shape data read in step S502 to create the shape data of an invariant area. The reference points of the coordinate systems for the peripheral area shape data and the shape data of the construction completion area are the same as the reference point in the construction-site coordinate system. The synthesized shape data can be easily obtained as a union of point cloud data, for example.

In step S508 following step S507, the similar shape mapping unit 51e extracts the key points of the shape data of the invariant area from the shape data of the invariant area created in step S507. In step S504 following step S508, the similar shape mapping unit 51e compares the key points of the current topography data extracted in step S501 with the key points of the shape data of the invariant area extracted in step S508 to obtain similar shape portions sequentially, and map the similar shape portions. In this way, the similar shape mapping unit 51e obtains the correspondence relationship between the shape data of the invariant area and the current topography data.

In step S505 following step S504, the similar shape mapping unit 51e writes the correspondence relationship obtained in step S504 in the memory 52.

The working machine 1A of the present embodiment determines the construction completion area and synthesizes the construction completion area with the peripheral area to be an invariant area. In this way, the present embodiment reduces the man-hours for localization, and measures the self-position and posture of the working machine in the construction-site coordinate system and the surrounding topographical shape.

[Third Embodiment]

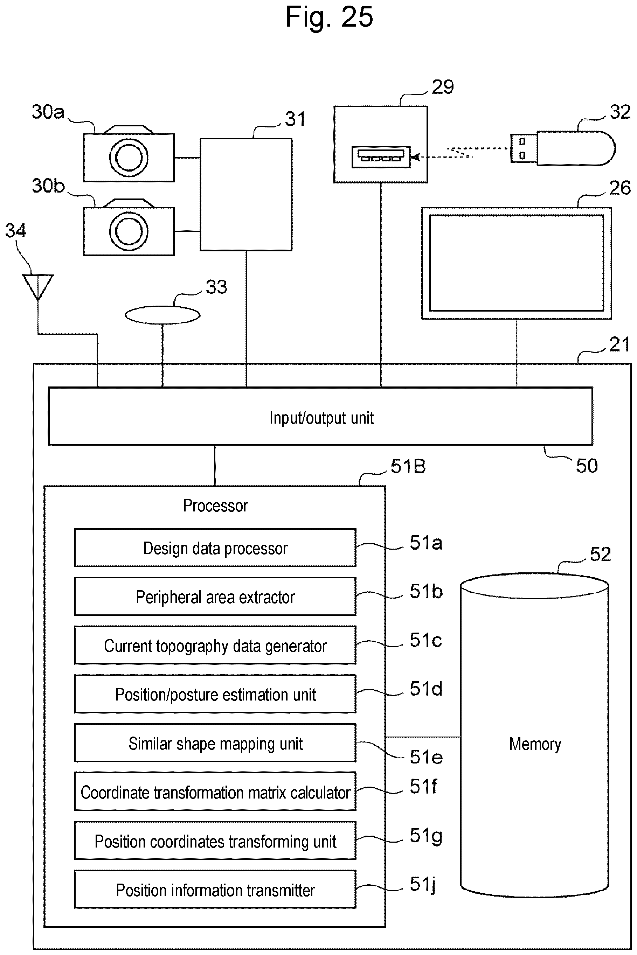

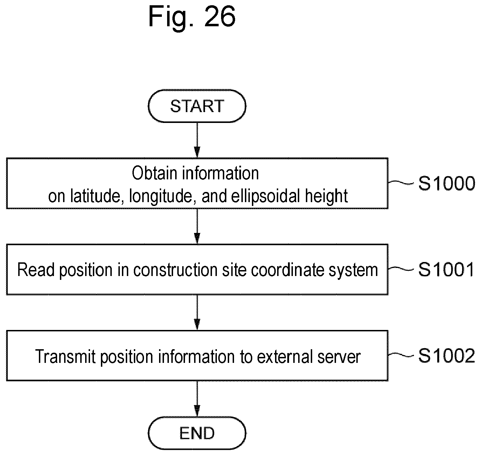

Referring to Fig. 25 and Fig. 26, the following describes a third embodiment of the working machine. The working machine of the present embodiment differs from the first embodiment as described above in that it receives a signal from a positioning satellite and integrates the geographic coordinates of the latitude, longitude, and ellipsoidal height of the work machine 1 on the earth with the position coordinates of the working machine 1 in the construction-site coordinate system, and transmits the integrated position coordinates to an external server. The other structure is the same as the first embodiment, and the duplicate explanations are omitted.

Fig. 25 is a schematic diagram of the configuration a control system of a working machine according to the third embodiment. As shown in Fig. 25, the control system of the working machine according to the present embodiment has a global navigation satellite system (GNSS) antenna (position obtainment device) 33 and a wireless communication antenna (communication device) 34 in addition to the control system described in the first embodiment. In the control system, the processor 51B further includes a position information transmitter 51j.

Fig. 26 is a flowchart showing the process by the position information transmitter 51j. As shown in Fig. 26, in step S1000, the position information transmitter 51j obtains information on the latitude, longitude, and ellipsoidal height of the working machine 1 on the earth from the positioning satellite using the GNSS antenna 33. In step S1001 following step S1000, the position information transmitter 51j reads the position information on the working machine 1 (i.e., the coordinates of the self-position of the working machine 1) in the construction-site coordinate system obtained by the position coordinates transforming unit 51g from the memory 52.

In step S1002 following step S1001, the position information transmitter 51j integrates the position information obtained in step S1000 and step S1001, and transmits the latitude, longitude, ellipsoidal height and the position information on the working machine 1 in the construction-site coordinate system as a pair to an external server installed in the office of the construction site, for example, via the wireless communication antenna 34. The installation location of the external server is not limited to the construction site, which may be a cloud server.

Similarly to the first embodiment, the present embodiment reduces the man-hours for localization and measures the self-position and posture of the working machine 1 in a construction-site coordinate system and the surrounding topographical shape, and the present embodiment further transmits a plurality of pairs of latitude, longitude, ellipsoidal height and position information on the working machine 1 in the construction-site coordinate system to the external server, which obtains the correspondence relationship between the latitude, longitude, ellipsoidal height and the coordinates of the self-position in the construction-site coordinate system.

That is a detailed description of the embodiments of the present invention. The present invention is not limited to the above-stated embodiments, and the design may be modified variously within the scope of the appended claims.

Reference Signs List

| | |
|---|---|
| 1, 1A | Working machine |
| 10 | Traveling body |
| 11 | Swing body |
| 12 | Working front |
| 21 | Controller |
| 26 | Display unit |
| 29 | Design data obtainment unit |
| 30 | Topography measuring device |
| 30a, 30b | Camera |
| 31 | Stereo camera controller |
| 32 | External storage medium |
| 33 | GNSS antenna (position obtainment device) |
| 34 | Wireless communication antenna (communication device) |
| 50 | Input/output unit |
| 51, 51A, 51B | Processor |
| 51a | Design data processor |
| 51b | Peripheral area extractor |
| 51c | Current topography data generator |
| 51d | Position/posture estimation unit |
| 51e | Similar shape mapping unit |
| 51f | Coordinate transformation matrix calculator |

| 51g | Position coordinates transforming unit |
| 51h | Construction area completion shape extractor |
| 51i | Construction completion area extractor |
| 51j | Position information transmitter |

**Claims**

1. A working machine (1, 1A) comprising:

   a traveling body (10) that travels;
   a swing body (11) mounted to the traveling body (10) to be swingable;
   a working front (12) mounted to the swing body (11) to be rotatable;
   a design data obtainment unit (29) configured to obtain design data that has topographical data after completion of construction in the form of three-dimensional data;
   a topography measuring device (30) configured to measure surrounding topographical data in the form of three-dimensional data; and
   a controller (21) having a design data processor (51a) configured to process the topographical data obtained by the design data obtainment unit (29) as a predetermined first coordinate system design data, a current topography data generator (51c) configured to generate current topography data of the second coordinate system from the topography data measured by the topography measuring device (30), the second coordinate system being defined based on the installation position of the topography measuring device (30), and a position/posture estimation unit (51d) configured to estimate a self-position and posture in the second coordinate system based on the current topography data generated by the current topography data generator (51c),
   the controller (21) being configured to
   extract peripheral area shape data from the first coordinate system design data, map similar shape portions between the extracted peripheral area shape data and the current topography data, calculate a coordinate transformation matrix to transform from the second coordinate system to the first coordinate system so that the difference in coordinate values of the mapped shape portions is minimized, and transform the self-position and posture of the working machine (1, 1A) and the current topography data from coordinates in the second coordinate system to coordinates in the first coordinate system using the calculated coordinate transformation matrix.

2. The working machine (1, 1A) according to claim 1, wherein the controller (21) extracts construction area completion shape data based on the first coordinate system design data, compares the extracted construction area completion shape data with the current topography data to extract a construction completion area, and map similar shape portions between the extracted shape data of the construction completion area and the current topography data.

3. The working machine (1, 1A) according to claim 1 or 2, further comprising:

   a position obtainment device (33) configured to obtain position coordinates of the working machine (1, 1A) on the earth; and
   a communication device (34) configured to exchange data with an external server,
   wherein
   the controller (21) transmits position coordinates of the working machine (1, 1A) obtained by the position obtainment unit together with coordinates of the self-position in the first coordinate system to the external server via the communication device (34).

**Patentansprüche**

1. Arbeitsmaschine (1, 1A), umfassend:

   einen Fahrkörper (10), der fährt;
   einen Schwenkkörper (11), der an dem Fahrkörper (10) angebracht ist, um schwenkbar zu sein;
   eine arbeitende Front (12), die an dem Schwenkkörper (11) angebracht ist, um drehbar zu sein;
   eine Entwurfsdatenerlangungseinheit (29), die ausgestaltet ist, um nach einem Abschluss einer Bauausführung Entwurfsdaten, die topographische Daten aufweisen, in Form von dreidimensionalen Daten zu erlangen;
   eine topographische Messeinrichtung (30), die ausgestaltet ist, um topographische Umgebungsdaten in Form von dreidimensionalen Daten zu messen; und

einen Controller (21), der einen Entwurfsdatenprozessor (51a), der ausgestaltet ist, um die durch die Entwurfsdatenerlangungseinheit (29) als vorbestimmte Entwurfsdaten eines ersten Koordinatensystems erlangten topographischen Daten zu verarbeiten, einen Generator (51c) für aktuelle topographische Daten, der ausgestaltet ist, um aktuelle topographische Daten des zweiten Koordinatensystems aus den durch die topographische Messeinrichtung (30) gemessenen topographischen Daten zu erzeugen, wobei das zweite Koordinatensystem basierend auf der Installationsposition der topographischen Messeinrichtung (30) definiert wird, und eine Positions-/Stellungs-Schätzeinheit (51d), die ausgestaltet ist, um eine eigene Position und eine Stellung in dem zweiten Koordinatensystem basierend auf den aktuellen topographischen Daten, die durch den Generator (51c) für aktuelle topographische Daten erzeugt werden, zu schätzen, aufweist, wobei der Controller (21) ausgestaltet ist, um

Daten der Form des Randgebiets aus den Entwurfsdaten des ersten Koordinatensystems zu extrahieren, Abschnitte mit ähnlicher Form zwischen den extrahierten Daten der Form des Randgebiets und den aktuellen topographischen Daten zuzuordnen, eine Koordinatentransformationsmatrix zur Transformation von dem zweiten Koordinatensystem in das erste Koordinatensystem zu berechnen, sodass die Differenz der Koordinatenwerte der zugeordneten Formabschnitte minimiert wird, und die eigene Position und Stellung der Arbeitsmaschine (1, 1A) und die aktuellen topographischen Daten von Koordinaten in dem zweiten Koordinatensystem unter Verwendung der berechneten Koordinatentransformationsmatrix in Koordinaten in dem ersten Koordinatensystem zu transformieren.

2. Arbeitsmaschine (1, 1A) nach Anspruch 1, wobei der Controller (21) Baustellenabschlussformdaten basierend auf den Entwurfsdaten des ersten Koordinatensystems extrahiert, die extrahierten Baustellenabschlussformdaten mit den aktuellen topographischen Daten vergleicht, um einen Baustellabschlussbereich zu extrahieren, und Abschnitte mit ähnlicher Form zwischen den extrahierten Formdaten des Baustellenabschlussbereichs und den aktuellen topographischen Daten zuordnet.

3. Arbeitsmaschine (1, 1A) nach Anspruch 1 oder 2, ferner umfassend:

eine Positionserlangungseinrichtung (33), die ausgestaltet ist, um Positionskoordinaten der Arbeitsmaschine (1, 1A) auf der Erde zu erlangen; und
eine Kommunikationseinrichtung (34), die ausgestaltet ist, um Daten mit einem externen Server auszutauschen, wobei
der Controller (21) Positionskoordinaten der Arbeitsmaschine (1, 1A), die durch die Positionserlangungseinheit erlangt werden, zusammen mit Koordinaten der eigenen Position in dem ersten Koordinatensystem über die Kommunikationseinrichtung (34) an den externen Server überträgt.

**Revendications**

1. Machine de chantier (1, 1A) comprenant :

un corps de déplacement (10) qui se déplace ;
un corps pivotant (11) monté sur le corps de déplacement (10) de manière à pouvoir pivoter ;
un dispositif de travail avant (12) monté sur le corps pivotant (11) de manière à pouvoir être mis en rotation ;
une unité d'obtention de données de conception (29) configurée pour obtenir des données de conception qui ont des données topographiques après une fin de chantier sous la forme de données tridimensionnelles ;
un dispositif de mesurage topographique (30) configuré pour mesurer des données topographiques environnantes sous la forme des données tridimensionnelles ; et
un contrôleur (21) ayant un processeur de données de conception (51a) configuré pour traiter les données topographiques obtenues par l'unité d'obtention de données de conception (29) à titre de données de conception d'un premier système de coordonnées prédéterminé, un générateur de données topographiques actuelles (51c) configuré pour générer des données topographiques actuelles du second système de coordonnées à partir des données topographiques mesurées par le dispositif de mesurage topographique (30), le second système de coordonnées étant défini sur la base de la position d'installation du dispositif de mesurage topographique (30), et une unité d'estimation de position/posture (51d) configurée pour estimer une propre position et posture dans le second système de coordonnées sur la base des données topographiques actuelles générées par le générateur de données topographiques actuelles (51c), le contrôleur (21) étant configuré pour
extraire des données de forme de zone périphérique à partir des données de conception du premier système de coordonnées, des portions de forme similaire cartographiées entre les données de forme de zone périphérique extraites et les données topographiques actuelles, calculer une matrice de transformation de coordonnées pour une transformation depuis le second système de coordonnées vers le premier système de coordonnées de telle sorte que la différence dans des valeurs de coordonnées des portions de forme cartographiées est minimisée, et transformer la propre position et posture de la machine de chantier (1, 1A) et les données topographiques actuelles depuis des coordonnées dans le second système de coordonnées en des coordonnées dans le premier système de coordonnées à l'aide de la matrice de transformation de coordonnées calculée.

2. Machine de chantier (1, 1A) selon la revendication 1, dans laquelle le contrôleur (21) extrait des données de forme de fin de zone de chantier sur la base des données de conception du premier système de coordonnées, compare les données de forme de fin de zone de chantier extraites aux données topographiques actuelles pour extraire une zone de fin de chantier, et des portions de forme similaire cartographiées entre les données de forme extraites de la zone de fin de chantier et les données topographiques actuelles.

3. Machine de chantier (1, 1A) selon la revendication 1 ou 2, comprenant en outre :

un dispositif d'obtention de position (33) configuré pour obtenir des coordonnées de position de la machine de chantier (1, 1A) sur la terre ; et
un dispositif de communication (34) configuré pour échanger des données avec un serveur externe,
dans laquelle
le contrôleur (21) transmet des coordonnées de position de la machine de chantier (1, 1A) obtenues par l'unité d'obtention de position, conjointement avec des coordonnées de la propre position dans le premier système de coordonnées, au serveur externe via le dispositif de communication (34).

# Fig. 1

Fig. 2

# Fig. 3

# Fig. 4

Input/output unit

Processor

| Design data processor | 51a |
| Peripheral area extractor | 51b |
| Current topography data generator | 51c |
| Position/posture estimation unit | 51d |
| Similar shape mapping unit | 51e |
| Coordinate transformation matrix calculator | 51f |
| Position coordinates transforming unit | 51g |

Memory

# Fig. 5

```
        ┌─────────────┐
        │    START    │
        └─────────────┘
               │
               ▼
┌──────────────────────────────────┐
│         Read design data         │──── S100
└──────────────────────────────────┘
               │
               ▼
┌──────────────────────────────────┐
│    Write design data in memory   │──── S101
└──────────────────────────────────┘
               │
               ▼
        ┌─────────────┐
        │     END     │
        └─────────────┘
```

# Fig. 6

# Fig. 7

# Fig. 8

# Fig. 9

```
         ┌─────────────┐
         │    START    │
         └──────┬──────┘
                │
                ▼
┌───────────────────────────────────────┐
│     Read design data from memory       │ ⌐ S200
└───────────────────┬───────────────────┘
                    │
                    ▼
┌───────────────────────────────────────┐
│      Extract peripheral area shape data │ ⌐ S201
└───────────────────┬───────────────────┘
                    │
                    ▼
┌───────────────────────────────────────┐
│  Write peripheral area shape data in memory │ ⌐ S202
└───────────────────┬───────────────────┘
                    │
                    ▼
         ┌─────────────┐
         │     END     │
         └─────────────┘
```

# Fig. 10

# Fig. 11

START

S300
Does memory have
current topography data?

NO

YES

Read current topography data — S301

S302
Read self-position and posture data

S305
Set current self-position
and posture as reference point

Obtain topographical information — S303

Estimate self-position and posture — S304

Write self-position and posture
in memory — S306

END

# Fig. 12

```
                    ┌─────────┐
                    │  START  │
                    └─────────┘
                         │
                         ▼
                    ╱─────────╲         S400
                   ╱  Does memory have  ╲────── NO ──┐
                   ╲ self-position and posture data? ╱         │
                    ╲─────────╱                                │
                         │                                     │
                        YES                                    │
                         ▼                                     │
          ┌──────────────────────────────┐                    │
          │ Read self-position and posture data │ ── S401      │
          └──────────────────────────────┘                    │
                         │                                     │
                         ▼                                     │
                    ╱─────────╲         S402                   │
                   ╱  Does memory have  ╲────── NO ──┐         │
                   ╲ current topography data? ╱                │         │
                    ╲─────────╱                      │         │
                         │                           │         │
                        YES                          │         │
                         ▼                           │         │
          ┌──────────────────────────────┐          │         │
          │   Read current topography data │ ── S403 │         │
          └──────────────────────────────┘          │         │
                         │◄───────────────────────────         │
                         ▼                                     │
          ┌──────────────────────────────┐                    │
          │  Obtain topographical information │ ── S404        │
          └──────────────────────────────┘                    │
                         │                                     │
                         ▼                                     │
          ┌──────────────────────────────┐                    │
          │ Generate current topography data │ ── S405         │
          └──────────────────────────────┘                    │
                         │                                     │
                         ▼                                     │
          ┌──────────────────────────────┐                    │
          │  Write current topography data │ ── S406           │
          │          in memory            │                    │
          └──────────────────────────────┘                    │
                         │                                     │
                         ▼                                     │
                    ┌─────────┐                                │
                    │   END   │                                │
                    └─────────┘                                │
```

# Fig. 13

```
        ( START )
            │
            ▼
┌────────────────────────────────┐
│  Read current topography data  │──── S500
└────────────────────────────────┘
            │
            ▼
┌─────────────────────────────────────────┐
│ Extract key point of current topography  │──── S501
│                data                       │
└─────────────────────────────────────────┘
            │
            ▼
┌────────────────────────────────┐
│  Read peripheral area shape data │──── S502
└────────────────────────────────┘
            │
            ▼
┌─────────────────────────────────────────┐
│ Extract key point of peripheral area     │──── S503
│           shape data                      │
└─────────────────────────────────────────┘
            │
            ▼
┌────────────────────────────────┐
│    Map similar shape portions   │──── S504
└────────────────────────────────┘
            │
            ▼
┌────────────────────────────────┐
│  Write correspondence relationship │──── S505
└────────────────────────────────┘
            │
            ▼
          ( END )
```

Fig. 14

# Fig. 15

# Fig. 16

```
                    ┌─────────────┐
                    │    START    │
                    └──────┬──────┘
                           │
                           ▼
        ┌──────────────────────────────────┐
        │  Read correspondence relationship │ ~ S600
        └──────────────────┬───────────────┘
                           │
                           ▼
                  S601
            ◇─────────────────────────◇  NO
            │  Nkeypoint≧Nthreshold ?  │ ────────────┐
            ◇─────────────────────────◇              │
                           │                          │
                          YES                         │
                           │         S602             │
                           ▼                          │
        ┌──────────────────────────────────┐         │
        │            Calculate              │         │
        │   coordinate transformation matrix │        │
        └──────────────────┬───────────────┘         │  S604
                           │         S603             ▼
                           ▼              ┌────────────────────┐
        ┌──────────────────────────────┐ │    Output error    │
        │ Write coordinate transformation│ └──────────┬─────────┘
        │          matrix in memory      │            │
        └──────────────────┬───────────┘             │
                           │◄──────────────────────────┘
                           ▼
                    ┌─────────────┐
                    │     END     │
                    └─────────────┘
```

# Fig. 17

# Fig. 18

START

Read coordinate transformation matrix from memory — S700

Read self-position and posture from memory — S701

Read current topography data from memory — S702

Calculate coordinates of self-position and posture
in construction site coordinate system — S703

Calculate current topography data
in construction site coordinate system — S704

Write self-position and posture
and current topography data
in construction site coordinate system — S705

END

# Fig. 19

# Fig. 20

29

31

30a

30b

32

26

21

Input/output unit

51A

50

Processor

Design data processor — 51a

Peripheral area extractor — 51b

Current topography data generator — 51c

Position/posture estimation unit — 51d

Similar shape mapping unit — 51e

Coordinate transformation matrix calculator — 51f

Position coordinates transforming unit — 51g

Construction area completion shape extractor — 51h

Construction completion area extractor — 51i

52

Memory

# Fig. 21

```
          ┌─────────┐
          │  START  │
          └─────────┘
               │
               ▼
┌──────────────────────────────────────┐
│     Read design data from memory     │── S800
└──────────────────────────────────────┘
               │
               ▼
┌──────────────────────────────────────┐
│ Extract construction area completion │── S801
│             shape data               │
└──────────────────────────────────────┘
               │
               ▼
┌──────────────────────────────────────┐
│ Write construction area completion   │
│          shape data                  │── S802
│           in memory                  │
└──────────────────────────────────────┘
               │
               ▼
          ┌─────────┐
          │   END   │
          └─────────┘
```

# Fig. 22

```
        ( START )
            │
            ▼
┌─────────────────────────────────────────┐
│ Read construction area completion shape data │ ～ S900
└─────────────────────────────────────────┘
            │
            ▼
┌─────────────────────────────────────────┐
│ Read current topography data            │
│ in construction site coordinate system from memory │ ～ S901
└─────────────────────────────────────────┘
            │
            ▼
┌─────────────────────────────────────────┐
│ Extract current topography data in construction area │ ～ S902
└─────────────────────────────────────────┘
            │
            ▼
┌─────────────────────────────────────────┐
│ Extract key surface                     │ ～ S903
└─────────────────────────────────────────┘
            │
            ▼
┌─────────────────────────────────────────┐
│ Extract construction completion area    │ ～ S904
└─────────────────────────────────────────┘
            │
            ▼
┌─────────────────────────────────────────┐
│ Extract shape data in construction completion area │ ～ S905
└─────────────────────────────────────────┘
            │
            ▼
┌─────────────────────────────────────────┐
│ Write shape data in construction completion area │ ～ S906
└─────────────────────────────────────────┘
            │
            ▼
         ( END )
```

# Fig. 23

# Fig. 24

START

Read current topography data — S500

Extract key point of current topography data — S501

Read peripheral area shape data — S502

Read shape data in construction completion area — S506

Generate shape data in invariant area — S507

Extract key points of shape data in invariant area — S508

Map similar shape portions — S504

Write correspondence relationship — S505

END

# Fig. 25

Processor 51B

| | |
|---|---|
| Design data processor | 51a |
| Peripheral area extractor | 51b |
| Current topography data generator | 51c |
| Position/posture estimation unit | 51d |
| Similar shape mapping unit | 51e |
| Coordinate transformation matrix calculator | 51f |
| Position coordinates transforming unit | 51g |
| Position information transmitter | 51j |

Input/output unit

Memory 52

# Fig. 26

```
          ┌─────────────┐
          │    START    │
          └──────┬──────┘
                 │
                 ▼
   ┌─────────────────────────────────────┐
   │          Obtain information          │ ──── S1000
   │ on latitude, longitude, and ellipsoidal height │
   └─────────────────┬───────────────────┘
                     │
                     ▼
   ┌─────────────────────────────────────┐
   │ Read position in construction site coordinate system │ ──── S1001
   └─────────────────┬───────────────────┘
                     │
                     ▼
   ┌─────────────────────────────────────┐
   │ Transmit position information to external server │ ──── S1002
   └─────────────────┬───────────────────┘
                     │
                     ▼
          ┌─────────────┐
          │     END     │
          └─────────────┘
```

**EP 3 919 692 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019174615 A
- JP 2019159727 A
- WO 2018079789 A